# EUROPEAN PATENT APPLICATION

(11) **EP 4 269 451 A1**
(43) Date of publication of application: **01.11.2023**
(21) Application number: 21910619.2
(22) Date of filing: 17.12.2021
(51) Int. Cl.: C08F 8/04, C08C 19/02, C08F 297/04

(54) **HYDROGENATED PRODUCT OF BLOCK COPOLYMER, RESIN COMPOSITION, AND METHOD FOR PRODUCING HYDROGENATED PRODUCT OF BLOCK COPOLYMER**

(30) Priority: 24.12.2020 JP 2020215818; 25.06.2021 JP 2021105639
(71) Applicant: Kuraray Co., Ltd., Kurashiki-shi, Okayama 710-0801 (JP)
(72) Inventor: SENDA, Yasushi, Kamisu-shi, Ibaraki 314-0197 (JP); KATO, Masahiro, Kamisu-shi, Ibaraki 314-0197 (JP)
(74) Representative: Müller-Boré & Partner Patentanwälte PartG mbB
(86) International application number: PCT/JP2021/046662
(87) International publication number: WO 2022/138473

(57) **Abstract**

A hydrogenated product of a block copolymer containing a polymer block (A) that contains a structural unit derived from an aromatic vinyl compound and a polymer block (B) that contains a structural unit derived from a conjugated diene compound, which satisfies the following requirements: (1) The structural unit derived from a conjugated diene compound of the polymer block (B) has a structural unit derived from butadiene and a structural unit derived from a second conjugated diene compound which is a conjugated diene compound except butadiene. (2) The glass transition temperature is -57°C or lower.

## Description

### Technical Field

The present invention relates to a hydrogenated product of a block copolymer, a resin composition, and a method for producing a hydrogenated product of a block copolymer.

### Background Art

A hydrogenated product of a block copolymer, such as a hydrogenated styrenic elastomer, is known, which contains a polymer block (A) formed of a structural unit derived from an aromatic vinyl compound and a polymer block (B) formed of a structural unit derived from a conjugated diene compound.

A hydrogenated styrenic elastomer is, as the case may be, often required to exhibit flexibility even in a low-temperature range.

It is known that, in a hydrogenated styrenic elastomer, when a component having a low glass transition temperature (Tg) such as a hydrogenated product of butadiene or isoprene is contained in the polymer block formed of a structural unit derived from a conjugated diene compound is used, the hydrogenated styrenic elastomer can generally exhibit flexibility even at a low temperature.

When Tg of a hydrogenated styrenic elastomer can be lowered further, the hydrogenated styrenic elastomer can behave like rubber even in a lower temperature range, and therefore can satisfy the demand for rubber which is more excellent in cold resistance.

It is considered that, by adding an elastomer to a resin, Tg of the resin turns to be lowered even in a field of use where impact resistance and heat shock resistance are imparted to the resin, and therefore the physical properties such as impact resistance or heat shock resistance of the resin can be thereby improved in a low temperature range.

When a 1,4-bonding butadiene segment (hereinafter this may be referred to as a "1,4-butadiene segment") in a polymer is hydrogenated, the hydrogenated product of a 1,4-butadiene segment has an ethylene structure. Consequently, when a polymer block formed of a structural unit derived from a conjugated diene compound is composed of a 1,4-butadiene segment alone, the polymer block can readily crystallize to lose flexibility.

Therefore, in an already-existing styrenic elastomer, butadiene is made to contain a 1,2-bonding butadiene segment (hereinafter this may be referred to as a "1,2-butadiene segment") in an amount of about 40% or so for example, to increase the degree of vinylation thereof, thereby preventing a majority of the polymer block formed of a structural unit derived from a conjugated diene compound from crystallizing.

However, a hydrogenated product of 1,2-polybutadiene has Tg of around - 40°C or so, and therefore, a hydrogenated styrenic elastomer formed using butadiene that contains a majority of 1,2-butadiene segments shall have an increased glass transition temperature thereof, therefore providing a problem that the physical properties thereof in a low temperature range are hardly improved.

Further, it considered that a hydrogenated 1,4-butadiene segment may partially crystallize, and the mobility of the non-crystallized part existing around the crystallized part worsens owing to the influence thereon of the crystallized part of a poorly movable component. Consequently, it is considered that such butadiene crystallization may relate to the increase in Tg of a hydrogenated block copolymer.

Accordingly, it is desired to improve the properties in a lower temperature range by a novel method differing from the already-known method of increasing the content of 1,2-butadiene segments.

A hydrogenated block copolymer containing a farnesene-derived monomer unit is known (for example, see PTL 1). In PTL 1, it is said that damping performance, flexibility, rubber elasticity and weather resistance can be improved by the hydrogenated block copolymer.

### Citation List

### Patent Literature

PTL 1: WO2013/183570

### Summary of Invention

### Technical Problem

However, for the hydrogenated block copolymer in PTL 1, nothing is taken into consideration relating to improving impact resistance in a temperature range of -60°C or so, or lower than -60°C, and the hydrogenated block copolymer described in PTL 1 has room for improvement in the above temperature range.

As just described, a hydrogenated styrenic elastomer having physical properties such as good impact resistance at a lower temperature is desired.

An object of the present invention is to provide a hydrogenated product of a block copolymer having a low glass transition temperature and exhibiting good rubber elasticity even in a low temperature range, and to provide a resin composition and a method for producing a hydrogenated product of a block copolymer.

### Solution to Problem

The present inventors have found that the above-mentioned problems can be solved by a hydrogenated product of a block copolymer containing a polymer block (A) that contains a structural unit derived from an aromatic vinyl compound and a polymer block (B) that contains a structural unit derived from a conjugated diene compound, in which the structural unit derived from a conjugated diene compound of the polymer block (B) is a specific one, and have completed the present invention.

The present invention relates to the following [1] to [16].
[1] A hydrogenated product of a block copolymer containing a polymer block (A) that contains a structural unit derived from an aromatic vinyl compound and a polymer block (B) that contains a structural unit derived from a conjugated diene compound, which satisfies the following requirements:
   (1) The structural unit derived from a conjugated diene compound of the polymer block (B) has a structural unit derived from butadiene and a structural unit derived from a second conjugated diene compound which is a conjugated diene compound except butadiene.
   (2) The glass transition temperature is -57°C or lower.
[2] The hydrogenated product of a block copolymer according to the above [1], in which the content of the polymer block (A) in the hydrogenated product of a block copolymer is 25% by mass or less.
[3] The hydrogenated product of a block copolymer according to the above [1] or [2], in which the weight-average molecular weight of the polymer block (A) is 5,000 to 20,000.
[4] The hydrogenated product of a block copolymer according to any one of the above [1] to [3], in which the hydrogenation ratio of the polymer block (B) is 85 mol% or more.
[5] The hydrogenated product of a block copolymer according to any one of the above [1] to [4], in which the weight-average molecular weight of the hydrogenated product of a block copolymer is 30,000 to 450,000.
[6] The hydrogenated product of a block copolymer according to any one of the above [1] to [5], in which the content of the structural unit derived from butadiene in the polymer block (B) is 10 to 90% by mass.
[7] The hydrogenated product of a block copolymer according to the above [6], in which the content of the structural unit derived from butadiene in the polymer block (B) is 10 to 40% by mass.
[8] The hydrogenated product of a block copolymer according to any one of the above [1] to [7], in which the second conjugated diene compound contains a β-farnesene.
[9] The hydrogenated product of a block copolymer according to the above [8], in which the total content of the structural unit derived from butadiene and a structural unit derived from β-farnesene in the polymer block (B) is 60% by mass or more.
[10] The hydrogenated product of a block copolymer according to any one of the above [1] to [9], having a shear storage modulus G' of 180 MPa or less, as measured at -60°C in a complex shear viscosity test under the condition of a frequency 1 Hz according to JIS K7244-10(2005).
[11] The hydrogenated product of a block copolymer according to any one of the above [1] to [10], having a peak top temperature at a loss tangent tanδ of -50°C or lower, as measured under the condition of a strain 1%, a frequency 1 Hz, a measurement temperature -80 to 0°C, a heating rate 3°C/min and a shear mode, according to JIS K7244-10(2005).
[12] The hydrogenated product of a block copolymer according to any one of the above [1] to [11], having a glass transition temperature of -60°C or lower.
[13] The hydrogenated product of a block copolymer according to any one of the above [1] to [12], in which the vinyl bonding amount in the polymer block (B) is 3 to 15 mol%.
[14] A resin composition containing:
   the hydrogenated product of a block copolymer of any one of the above [1] to [13], as a component (a), and
   one or more selected from the group consisting of a polyolefin, a styrenic resin, a polyphenylene ether, a polyester resin, a polycarbonate, a polyacetal, a polyamide, a polyarylene sulfide, a polyarylate, a polyimide, a polyether ether ketone, and a liquid-crystal polyester, as a component (b), in which:
      the content ratio of the component (a) to the component (b), (a)/(b) is 1/99 to 99/1 by mass.
[15] A method for producing the hydrogenated product of a block copolymer of any one of the above [1] to [13], including:
   a first step of performing a polymerization reaction using at least an aromatic vinyl compound, a butadiene and the second conjugated diene compound as monomers to obtain a block copolymer containing a polymer block (A) that contains a structural unit derived from the aromatic vinyl compound and a polymer block (B) that contains a structural unit derived from the butadiene and a structural unit derived from the second conjugated diene compound, and
   a second step of hydrogenating the block copolymer.

### Advantageous Effects of Invention

The present invention provides a hydrogenated product of a block copolymer having a low glass transition temperature and exhibiting good rubber elasticity even in a low temperature range, as well as a resin composition and a method for producing a hydrogenated product of a block copolymer.

### Description of Embodiments

Hereinunder embodiments of the present invention are described.

The present invention also includes modes in which any of the items described in the present description are arbitrarily selected or combined.

In the description, preferable definitions can be arbitrarily selected, and a combination of preferable definitions is more preferable.

In the description, the expression "XX to YY" means "XX or more and YY or less".

In the description, with respect to a preferable numerical range (for example, a range of a content), a lower limit value and an upper limit value described stepwise can be independently combined. For example, from the description of "preferably 10 to 90, and more preferably 30 to 60", "10 to 60" can be obtained by combining "a preferred lower limit value (10)" and "a preferred upper limit value (60)".

### [Hydrogenated Product of Block Copolymer]

The hydrogenated product of a block copolymer of an embodiment of the present invention is a hydrogenated product of a block copolymer containing a polymer block (A) that contains a structural unit derived from an aromatic vinyl compound and a polymer block (B) that contains a structural unit derived from a conjugated diene compound, which satisfies the following requirements (1) and (2):
(1) The structural unit derived from a conjugated diene compound of the polymer block (B) has a structural unit derived from butadiene and a structural unit derived from a second conjugated diene compound which is a conjugated diene compound except butadiene.
(2) The glass transition temperature is -57°C or lower.

Satisfying the requirement (1), (i) for example, by copolymerization of a butadiene and the above-mentioned second conjugated diene compound, continuous bonding of units derived from butadiene can be prevented and, as a result, the polymer block (B) can be prevented from crystallizing so that the requirement (2) can be thereby more readily satisfied. In addition, (ii) using a compound having a bulky substituent in the side chain as the second conjugated diene compound, butadiene crystallization can be readily prevented so that the requirement (2) can be also readily satisfied.

For example, β-farnesene is equivalent to butadiene in point of the reaction speed in anionic polymerization and can be readily copolymerized at highly randomly. In addition, β-farnesene has a bulky side chain, and therefore can highly effectively prevent crystallization of a hydrogenated butadiene.

In addition, satisfying the requirement (2), the glass transition temperature of the hydrogenated product of a block copolymer can be sufficiently low, and even in a low temperature range of approximately -60°C or lower, the hydrogenated product of a block copolymer can readily secure good flexibility and rubber elasticity.

Accordingly, satisfying the requirements (1) and (2), the physical properties such as flexibility and impact resistance of the hydrogenated product of a block copolymer can be bettered even a low temperature range of approximately -60°C or lower.

In the present description, Tg of the hydrogenated product of a block copolymer is measured using a differential scanning colorimeter (DSC). Specifically, on the DSC curve drawn with DSC, the temperature at which the base line began to shift is referred to as Tg. In more detail, Tg of the hydrogenated product of a block copolymer is measured according to the method described in Examples.

Hereinunder the components constituting the hydrogenated product of a block copolymer are described.

### <Block Copolymer>

The hydrogenated product of a block copolymer is one produced by hydrogenation of a block copolymer. In the present description, the hydrogenated product of a block copolymer can also be referred to as a "hydrogenated block copolymer".

The block copolymer in the embodiment of the present invention contains a polymer block (A) that contains a structural unit derived from an aromatic vinyl compound and a polymer block (B) that contains a structural unit derived from a conjugated diene compound.

With that, as defined in the requirement (1), the structural unit derived from the conjugated diene compound of the polymer block (B) has a structural unit derived from a butadiene and a structural unit derived from a second conjugated diene compound, a conjugated diene compound except butadiene. The polymer block (B) will be described in detail later.

Also as defined in the requirement (2), Tg of the hydrogenated block copolymer is -57°C or lower. Tg of the hydrogenated block copolymer is, from the viewpoint of more readily securing impact resistance and rubber elasticity at a lower temperature, preferably -60°C or lower, more preferably -62°C or lower, even more preferably -63°C or lower, further more preferably -64°C or lower. The lower limit of Tg of the hydrogenated product of a block copolymer is not specifically limited, but is, for example, from the viewpoint of easy producibility, -80°C. In other words, Tg of the hydrogenated product of a block copolymer is preferably -80 to -57°C, more preferably -80 to -60°C.

Tg of the hydrogenated block copolymer can be made to fall within the above range, for example, by reducing the content of the structural unit derived from butadiene in the polymer block (B) of the hydrogenated block copolymer to thereby suppress crystallization of the hydrogenated butadiene.

### (Polymer Block (A))

The polymer block (A) contains a structural unit derived from an aromatic vinyl compound (hereinafter this may be abbreviated as an "aromatic vinyl compound unit"), and the content thereof is, from the viewpoint of mechanical properties, preferably more than 70 mol%, more preferably 80 mol% or more, even more preferably 85 mol% or more, further more preferably 90 mol% or more, especially more preferably 95 mol% or more, and can be substantially 100 mol%.

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, 8-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, styrene derivatives substituted with a silyl group, indene, and vinylnaphthalene. These aromatic vinyl compounds may be used alone, or two or more kinds thereof may be used in combination. Among these, from the viewpoint of production cost and physical property balance, styrene, α-methylstyrene, p-methylstyrene, and mixtures thereof are preferable, and styrene is more preferable.

The polymer block (A) may contain a structural unit derived from an unsaturated monomer other than the aromatic vinyl compound (hereinafter sometimes abbreviated as "the other unsaturated monomer unit") in a ratio of less than 30 mol%, as long as the object and effects of the present invention are not impaired. Examples of the other unsaturated monomer include at least one selected from the group consisting of butadiene, isoprene, 2,3-dimethylbutadiene, 1,3-pentadiene, 1,3-hexadiene, isobutylene, methyl methacrylate, methyl vinyl ether, N-vinylcarbazole, β-pinene, 8,9-p-menthene, dipentene, methylenenorbornene, 2-methylenetetrahydrofuran and the like. In the case where the polymer block (A) contains the other unsaturated monomer unit, the bonding mode is not particularly limited and may be random or tapered.

The content of the structural unit derived from the other unsaturated monomer in the polymer block (A) is preferably 10 mol% or less, more preferably 5 mol% or less, even more preferably 0 mol%.

The hydrogenated block copolymer can have at least one polymer block (A). In the case where the hydrogenated block copolymer has two or more polymer blocks (A), these polymer blocks (A) may be the same or different. In the present description, the expression "the polymer blocks are different" means that at least one of the monomer units constituting the polymer blocks, the weight average molecular weight, the stereoregularity, and in the case of having a plurality of monomer units, the ratio of each monomer unit and the mode of copolymerization (random, gradient, block) is different.

Preferably, the hydrogenated block copolymer has two polymer blocks (A).

The weight average molecular weight (Mw) of the polymer block (A) is not particularly limited, but the weight average molecular weight of at least one polymer block (A) among the polymer blocks (A) included in the block copolymer is preferably 3,000 to 60,000, more preferably 4,000 to 50,000, even more preferably 4,100 to 20,000, further more preferably 5,000 to 20,000, especially more preferably 4,200 to 10,000, and is most preferably 4,400 to 7,000. When the block copolymer has at least one polymer block (A) having a weight average molecular weight within the above range, the mechanical strength thereof improves more and the block copolymer can be excellent in flowability and film moldability.

"Weight-average molecular weight" described in the present description and the claims is all in terms of a standard polystyrene-equivalent weight-average molecular weight measured in gel permeation chromatography (GPC), and for detailed measurement thereof, the method described in Examples can be referred. The weight-average molecular weight of each polymer block that the block copolymer has can be measured every time after polymerization of every polymer block in a production process, by measuring sampled liquids. Here, for example, two kinds of polymer blocks (A) are expressed as "A1" and "A2", and one kind of a polymer block (B) is as "B". In that case, a triblock copolymer having a structure A1-B-A2 can be analyzed as follows. The weight-average molecular weight of the polymer block "A1" and that of the polymer block "B" are determined according to the above-mentioned method, and the resultant data are subtracted from the weight-average molecular weight of the block copolymer to give the weight-average molecular weight of the polymer block "A2". As another method, for the triblock copolymer having the structure A1-B-A2, a total weight-average molecular weight of the polymer blocks "A1" and "A2" is calculated from the weight-average molecular weight of the block copolymer and the total content of the polymer blocks "A1" and "A2" confirmed in ¹H-NMR analysis, then the weight-average molecular weight of the deactivated first polymer block "A1" is calculated in GPC, and this is subtracted from the previous data to give the weight-average molecular weight of the polymer block "A2".

The content of the polymer block (A) in the hydrogenated block copolymer (in the case where the copolymer has plural polymer blocks (A), the total content thereof) is, from the viewpoint of more readily securing impact resistance and rubber elasticity at a lower temperature, preferably 25% by mass or less, more preferably 22% by mass or less, even more preferably 18% by mass or less, further more preferably 15% by mass or less, and is, from the viewpoint of mechanical properties, preferably 3% by mass or more, more preferably 5% by mass or more, even more preferably 7% by mass or more. In other words, the content of the polymer block (A) in the block copolymer is preferably 3 to 25% by mass.

The content of the polymer block (A) in the hydrogenated block copolymer is a value obtained by ¹H-NMR measurement, and more specifically, a value measured according to the method described in Examples.

### (Polymer Block (B))

The polymer block (B) contains a structural unit derived from a conjugated diene compound (hereinafter this may be abbreviated as a "conjugated diene compound unit"), and the conjugated diene compound unit has a structural unit derived from butadiene and a structural unit derived from a second conjugated diene compound which is a conjugated diene compound except butadiene.

Tg of polyethylene having a structure equivalent to the structure formed by hydrogenation of a 1,4-butadiene segment is said to be approximately -120°C or so. Consequently, when a hydrogenated butadiene is used as the polymer block (B) having a structural unit derived from a conjugated diene and can therefore be further prevented from crystallization, it is presumed that a hydrogenated block copolymer having a low Tg can be obtained.

Consequently, when a second conjugated diene compound differing from butadiene is used as the monomer to constitute the polymer block (B), continuous bonding of units derived from butadiene can be prevented and crystallization of butadiene can be more readily prevented, and as a result, crystallization of the polymer block (B) can be thereby prevented more readily.

Even when a compound having a bulky substituent in the side chain is used as the second conjugated diene compound, butadiene crystallization can be readily prevented and, as a result, crystallization of the polymer block (B) can be thereby prevented more readily.

Examples of the second conjugated diene compound include isoprene, and a conjugated diene compound having a hydrocarbon group with 6 or more carbon atoms. The conjugated diene compound having a hydrocarbon group with 6 or more carbon atoms includes myrcene, and β-farnesene, and is especially preferably β-farnesene. As mentioned above, β-farnesene is equivalent to butadiene in point of the reaction speed in anionic polymerization, and therefore can be copolymerized highly randomly. In addition, β-farnesene has a bulky side chain, and therefore has a high effect of preventing crystallization of hydrogenated butadiene. Moreover, Tg of hydrogenated β-farnesene is -60°C or so and is low, and therefore β-farnesene can readily lower Tg of a hydrogenated product of a block copolymer.

One kind alone or two or more kinds of second conjugated diene compounds can be used either singly or as combined. For example, as the conjugated diene compound for use to constitute the polymer block (B), a combination of butadiene/isoprene/β-farnesene can be used.

The content of the structural unit derived from butadiene in the polymer block (B) is, from the viewpoint of suppressing crystallization of the polymer block (B), preferably 10 to 90% by mass, more preferably 10 to 70% by mass, even more preferably 10 to 40% by mass. Also from the same viewpoint, the content is preferably 13 to 60% by mass, more preferably 15 to 50% by mass. From the viewpoint of securing strength, the content is preferably 20 to 80% by mass, more preferably 25 to 70% by mass, even more preferably 30 to 65% by mass, further more preferably 35 to 60% by mass.

The content of the conjugated diene compound unit in the polymer block (B) (that is, the total content of the structural unit derived from butadiene and the structural unit derived from the second conjugated diene compound) is, from the viewpoint of flexibility and rubber elasticity, preferably 60% by mass or more, more preferably 70% by mass or more, even more preferably 80% by mass or more, especially preferably 90% by mass or more. The upper limit is not specifically limited, and can be 100% by mass. In other words, the total content of the structural unit derived from butadiene and the structural unit derived from the second conjugated diene compound in the polymer block (B) is preferably 60 to 100% by mass. Also in the case where the second conjugated diene compound is β-farnesene, the above range is preferred.

The content of the conjugated diene compound unit in the polymer block (B) is, as a molar amount, preferably 30 mol% or more, more preferably 50 mol% or more, even more preferably 65 mol% or more, further more preferably 80 mol% or more, further more preferably 90 mol% or more, and is most preferably substantially 100 mol%.

The mixing ratio of the conjugated diene compound [butadiene/second conjugated diene compound] (by mass) is not specifically limited so far as it does not detract from the advantageous effects of the invention, but is preferably 5/95 to 95/5, more preferably 10/90 to 90/10, even more preferably 15/85 to 50/50, further more preferably 18/82 to 45/55. The mixing ratio [butadiene/second conjugated diene compound] is, as a molar ratio, preferably 5/95 to 95/5, more preferably 10/90 to 90/10, even more preferably 40/60 to 80/20, further more preferably 45/55 to 75/25.

Also not detracting from the object and the advantageous effects of the present invention, the polymer block (B) can contain a structural unit derived from any other polymerizable monomer than a conjugated diene compound. In that case, the content of the structural unit derived from the other polymerizable monomer than a conjugated diene compound is preferably 70 mol% or less, more preferably 50 mol% or less, even more preferably 35 mol% or less, further more preferably 20 mol% or less. The lower limit of the content of the structural unit derived from the other polymerizable monomer than a conjugated diene compound is not specifically limited, and can be 0 mol%, or can be 5 mol%, or can be 10 mol%.

Preferred examples of the other polymerizable monomer include aromatic vinyl compounds such as styrene, α-methylstyrene, o-methylstyrene, m-methylstyrene, p-methylstyrene, p-t-butylstyrene, 2,4-dimethylstyrene, vinylnaphthalene, and vinylanthracene; and at least one compound selected from the group consisting of methyl methacrylate, methyl vinyl ether, N-vinylcarbazole, β-pinene, 8,9-p-menthene, dipentene, methylenenorbornene, 2-methylenetetrahydrofuran, 1,3-cyclopentadiene, 1,3-cyclohexadiene, 1,3-cycloheptadiene, and 1,3-cyclooctadiene. Above all, styrene, α-methylstyrene and p-methylstyrene are more preferred, and styrene is even more preferred.

In the case where the polymer block (B) contains a structural unit derived from the other polymerizable monomer than a conjugated diene compound, the bonding mode is not specifically limited, and can be any of a random or tapered mode, but a random mode is preferred.

The block copolymer may have at least one polymer block (B). In the case where the block copolymer has two or more polymer blocks (B), these polymer blocks (B) can be the same or different. In the case where the polymer block (B) has two or more kinds of structural units, the bonding mode can be random, tapered, completely alternate, partially block, block or a combination of two or more kinds thereof.

The bonding mode of the conjugated diene compound is not particularly limited so far as it does not detract from the object and the advantageous effects of the invention. For example, in the case where the structural unit constituting the polymer block (B) is a mixture unit of butadiene and isoprene, or a mixture unit of butadiene and β-farnesene, the bonding mode of butadiene, isoprene and β-farnesene can be a 1,2-bond or 1,4-bond for butadiene, a 1,2-bond, 3,4-bond or 1,4-bond for isoprene, and a 1,2-bond, 1,13-bond or 3,13 bond for β-farnesene. There can exist one alone or two or more kinds of these bonding modes.

B-farnesene is given a carbon position number as follows.

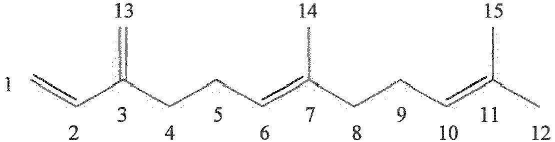

### (Vinyl Bonding Amount in Polymer Block (B))

In the case where the structural unit constituting the polymer block (B) is any of a mixture unit of butadiene and isoprene, or a mixture unit of butadiene and β-farnesene, the bonding mode of butadiene, isoprene and β-farnesene can be a 1,2-bond or 1,4-bond for butadiene, a 1,2-bond, 3,4-bond or 1,4-bond for isoprene, and a 1,2-bond, 1,13-bond or 3,13-bond for β-farnesene. Among these, the 1,2-bond for butadiene, the 1,2-bond and the 3,4-bond for isoprene, and the 1,2-bond and the 3,13-bond for β-farnesene is a vinyl bond, and the content of the vinyl bond unit is a vinyl bonding amount.

In the hydrogenated block copolymer, the total of the vinyl bonding amount in the polymer block (B) is, from the viewpoint of lowering Tg, preferably 15 mol% or less, more preferably 13 mol% or less, even more preferably 12 mol% or less. Though not specifically limited, the lower limit of the vinyl bonding amount in the polymer block (B) can be, from the viewpoint of easy producibility, 3 mol% or more, or can be 5 mol% or more. In other words, the vinyl bonding amount in the polymer block (B) is preferably 3 to 15 mol%. Here, the vinyl bonding amount is a value calculated in ¹H-NMR according to the method described in Examples.

The total weight-average molecular weight of the polymer block (B) that the block copolymer has is, from the viewpoint of impact resistance and rubber elasticity at a low temperature and in the form before hydrogenation, preferably 15,000 to 800,000, more preferably 20,000 to 600,000, even more preferably 30,000 to 400,000, further more preferably 50,000 to 250,000, and is most preferably 70,000 to 200,000.

The block copolymer may have at least one polymer block (B). In the case where the block copolymer has two or more polymer blocks (B), these polymer blocks (B) can be the same or different.

Preferably, the block copolymer has only one polymer block (B).

In the hydrogenated block copolymer, preferably, the polymer block (B) does not contain a structural unit derived from an aromatic vinyl compound. When a structural unit derived from an aromatic vinyl compound is contained in the polymer block (B) impact resistance and rubber elasticity at a low temperature may be deteriorated.

### (Bonding Mode of Polymer Block (A) and Polymer Block (B))

The bonding mode of the hydrogenated block copolymer is not limited as long as the polymer block (A) and the polymer block (B) are bonded to each other, and may be any of a linear bonding mode, a branched bonding mode, a radial bonding mode, and a bonding mode in which two or more of these are combined. Among these, the bonding mode between the polymer block (A) and the polymer block (B) is preferably linear, and examples thereof include a diblock copolymer represented by A-B, a triblock copolymer represented by A-B-A or B-A-B, a tetrablock copolymer represented by A-B-A-B, a pentablock copolymer represented by A-B-A-B-A or B-A-B-A-B, and a (A-B)nX type copolymer (where X represents a coupling agent residue and n represents an integer of 3 or more) when the polymer block (A) is represented by "A" and the polymer block (B) is represented by "B". Among them, a linear triblock copolymer or a diblock copolymer is preferable, and an A-B-A type triblock copolymer is preferably used from the viewpoints of flexibility, ease of production, and the like.

Here, in the description herein, when polymer blocks of the same type are linearly bonded via a bifunctional coupling agent or the like, the entire bonded polymer blocks are treated as one polymer block. Accordingly, including the above-described examples, a polymer block that should be originally strictly denoted by Y-X-Y (X represents a coupling residue) is represented as Y as a whole unless it is necessary to distinguish it from a single polymer block Y. In the description herein, since a polymer block of this type containing a coupling agent residue is treated as described above, for example, a block copolymer containing a coupling agent residue that should be strictly denoted by A-B-X-B-A (X represents a coupling agent residue) is represented by A-B-A and is treated as an example of a triblock copolymer.

The hydrogenation ratio of the polymer block (B) is preferably 85 mol% or more. In other words, it is preferable that 85 mol% or more of the carbon-carbon double bond that the polymer block (B) has is hydrogenated.

When the hydrogenation ratio of the polymer block (B) is high, impact resistance and rubber elasticity at a low temperature and heat resistance and weather resistance can be excellent. From the same viewpoint, the hydrogenation ratio of the polymer block (B) is more preferably 87 mol% or more, even more preferably 90 mol% or more, further more preferably 93 mol% or more, and especially preferably 95 mol% or more. The upper limit of the hydrogenation ratio is not specifically limited, and the upper limit can be 99 mol%, or can be 98 mol%. In other words, the hydrogenation ratio of the block copolymer (B) is preferably 85 to 99 mol%.

The hydrogenation ratio is a value derived from the content of the carbon-carbon double bond in the structural unit derived from a conjugated diene compound in the polymer block (B) measured in ¹H-NMR after hydrogenation, and is more precisely a value measured according to the method described in Examples.

The hydrogenated block copolymer may have a crystallization temperature of 0°C or lower, or may not have a crystallization temperature. The hydrogenated copolymer having a crystallization temperature of 0°C or lower, and the copolymer not having a crystallization temperature can have improved flexibility and rubber elasticity. From the viewpoint of improving flexibility and rubber elasticity, the crystallization temperature is more preferably 0°C or lower, even more preferably -10°C or lower, further more preferably -10°C or lower, further more preferably - 30°C or lower. The lower limit of the crystallization temperature is not specifically limited, and can be, for example, -70°C. In other words, when the hydrogenated block copolymer has a crystallization temperature, the crystallization temperature thereof is preferably -70 to 0°C.

In the present description, the crystallization temperature of the hydrogenated block copolymer is measured in thermal analysis using DSC, and specifically, it is measured according to the method described in Examples.

The crystallization temperature of the hydrogenated block copolymer can be set as in the above, for example, by controlling the polymerization condition for the diene monomer.

The hydrogenated block copolymer may have a crystallization heat of 20 J/g or less, or may not have a crystallization peak. The hydrogenated block copolymer having a crystallization heat of 20 J/g or less, or not having a crystallization temperature can have improved flexibility and rubber elasticity. From the viewpoint of improving flexibility and rubber elasticity, the crystallization heat is more preferably 15 J/g or less, even more preferably 10 J/g or less, further more preferably 5 J/g or less, and especially preferably the copolymer does not have a crystallization peak. The lower limit of the crystallization heat is not specifically limited and is, for example, 1 J/g. In other words, the crystallization heat of the hydrogenated block copolymer having a crystallization peak is preferably 1 to 20 J/g.

In the present description, the crystallization heat of the hydrogenated block copolymer can be measured in thermal analysis using DSC, and specifically, it can be measured according to the method described in Examples.

The crystallization heat of the hydrogenated block copolymer can be set as in the above, for example, by controlling the polymerization condition for the diene monomer.

### (Weight-Average Molecular Weight (Mw) of Hydrogenated Block Copolymer)

The weight-average molecular weight (Mw) of the hydrogenated block copolymer, measured as a standard polystyrene-equivalent one in gel permeation chromatography, is, from the viewpoint of heat resistance and moldability, preferably 30,000 to 450,000, more preferably 35,000 to 400,000, even more preferably 40,000 to 350,000, further more preferably 45,000 to 300,000, and is most preferably 50,000 to 250,000.

The weight-average molecular weight of the hydrogenated block copolymer can be set to fall within the above range, for example, by controlling the monomer amount relative to the polymerization initiator.

So far as not detracting from the object and the effects of the present invention, the hydrogenated block copolymer can have one or two or more functional groups such as a carboxy group, a hydroxy group, an acid anhydride group, an amino group or an epoxy group, in the molecular chain and/or at the molecular terminal, or may not have a functional group.

### (Physical Properties of Hydrogenated Block Copolymer)

The shear storage modulus G' at -60°C of the hydrogenated block copolymer, as measured in a complex shear viscosity test under the condition of a frequency 1 Hz according to JIS K7244-10(2005), is, from the viewpoint of flexibility at a low temperature, preferably 180 MPa or less, more preferably 150 MPa or less, even more preferably 130 MPa or less. The lower limit of the shear storage modulus G' is not specifically limited and is, for example, from the viewpoint of mechanical strength, 10 MPa. In other words, the shear storage elasticity G' at -60°C of the hydrogenated block copolymer is preferably 10 to 180 MPa. More precisely, the shear storage elasticity G' is measured according to the method described in Examples.

Regarding the peak top intensity at a loss tangent tanδ of the hydrogenated block copolymer, as measured under the condition of a strain 1%, a frequency 1 Hz, a measurement temperature -80 to 0°C, a heating rate 3°C/min and a shear mode, according to JIS K7244-10(2005), a larger value thereof means that the copolymer is excellent in flexibility at a low temperature, and when the value is 0.3 or more, the copolymer can have a sufficient flexibility at a low temperature. The peak top intensity at tanδ is preferably 0.3 or more, more preferably 0.5 or more, even more preferably 0.6 or more.

Also the peak top temperature at a loss tangent tanδ of the hydrogenated copolymer, as measured under the condition of a strain 1%, a frequency 1 Hz, a measurement temperature -80 to 0°C, a heating rate 3°C/min and a shear mode, according to JIS K7244-10(2005), is, from the viewpoint of securing sufficient flexibility and rubber elasticity at a low temperature range, preferably -50°C or lower, more preferably -51°C or lower, even more preferably -52°C or lower. The lower limit of the peak top temperature at a loss tangent tanδ is not specifically limited, and is, from the viewpoint of easy producibility, for example, -70°C. In other words, the peak top temperature at a loss tangent tanδ of the hydrogenated block copolymer is preferably -70 to -50°C.

Here, the peak top intensity at tanδ refers to a value tanδ when the peak at tanδ becomes maximum. Further, the peak top temperature at tanδ is a temperature at which the peak at tanδ becomes maximum. Specifically, the peak top temperature at tanδ and the peak top intensity at tanδ of the block copolymer or the hydrogenated product thereof are measured according to the method described in Examples.

One example of controlling these values to fall within the above range is a method of controlling the ratio of the second conjugated diene compound that is a monomer to constitute the polymer block (B).

### [Resin Composition]

The resin composition of the embodiment of the present invention contains the hydrogenated product of a block copolymer of as a component (a), and one or more selected from the group consisting of a polyolefin such as a polyethylene, a polypropylene, an α-olefin copolymer and an ethylene propylene terpolymer, a styrenic resin, a polyphenylene ether, a polyester resin, a polycarbonate, a polyacetal, a polyamide, a polyarylene sulfide, a polyarylate, a polyimide, a polyether ether ketone, and a liquid-crystal polyester, as a component (b), in which the content ratio of the component (a) to the component (b), (a)/(b) is 1/99 to 99/1 by mass.

In one embodiment, the total content of the component (a) and the component (b) in the resin composition is preferably 50% by mass or more, more preferably 60% by mass or more, even more preferably 80% by mass or more, further more preferably 90% by mass or more, and is most preferably 95% by mass or more.

Containing the hydrogenated block copolymer as the component (a), the resin composition can have increased impact resistance and heat shock resistance in a low temperature range at around -20°C or so or lower than it, relative to the component (b) that is a resin composition before addition of the component (a) thereto and as compared with the component (b).

The content ratio of the component (a) to the component (b), (a)/(b) in the resin composition is, from the viewpoint that the resin composition can satisfy both mechanical properties and low-temperature properties, preferably 1/99 to 50/50, more preferably 3/97 to 30/70, even more preferably 4/96 to 25/75, further more preferably 5/95 to 20/80.

The resin composition can contain, as any other resin component than the component (a) and the component (b) and within a range not detracting from the effects of the present invention, any other polymer, for example, a hydrogenated resin such as a hydrogenated chroman/indene resin, a hydrogenated rosin resin, a hydrogenated terpene resin and an alicyclic hydrogenated petroleum resin; a tackifier resin such as an aliphatic resin of an olefin or diolefin polymer; and a hydrogenated polyisoprene, a hydrogenated polybutadiene, a butyl rubber, a polyisobutylene and a polybutene.

In the case where the resin composition contains the other resin component than the component (a) and the component (b), the content of the other component than the component (a) and the component (b) in the composition is, though not specifically limited thereto but preferably 50% by mass or less. In that case, the content of the block copolymer of the present invention in the composition is, from the viewpoint of impact resistance and rubber elasticity at a low temperature, preferably 50% by mass or more, more preferably 60% by mass or more, even more preferably 80% by mass or more, further more preferably 90% by mass or more, and is most preferably 95% by mass or more.

### (Additive)

Examples of the other component than the resin component contained in the resin composition include, though not limited thereto, additives such as an antioxidant, a UV absorbent, a light stabilizer, a heat insulating material, an antiblocking agent, a pigment, a dye, a softener, a crosslinking agent, a crosslinking aid, .a crosslinking accelerator, a filler, a reinforcing material, a lubricant, an antistatic agent, a flame retardant, a foaming agent, a water repellent, a waterproofing agent, an electroconductivity imparting agent, a thermal conductivity imparting agent, an electromagnetic wave shieldability imparting agent, a fluorescent material and an antibacterial agent. One kind alone or two or more kinds of these can be used either singly or as combined.

Examples of the antioxidant include a phenolic antioxidant, a phosphorus-containing antioxidant, and a sulfur-containing antioxidant.

The UV absorbent includes a benzotriazole-type UV absorbent, a hindered amine-type UV absorbent, and a benzoate-type UV absorbent, and in addition thereto, also usable are a triazine compound, a benzophenone compound, a malonic ester compound, and an oxalic anilide compound.

Examples of the light stabilizer include a hindered amine-type light stabilizer.

Examples of the heat-insulating material include materials produced by adding heat ray-shielding particles having a heat ray-shielding function, or an organic coloring matter compound having a heat ray-shielding function to a resin or glass. Examples of particles having a heat ray-shielding function include particles of an inorganic material having a heat ray-shielding function, such as particles of an oxide such as tin-doped indium oxide, antimony-doped tin oxide, aluminum-doped zinc oxide, tin-doped zinc oxide or silicon-doped zinc oxide, as well as LaB₆ (lanthanum hexoxide) particles. Examples of the organic coloring matter compound having a heat ray-shielding function include a diimonium coloring matter, an aminium coloring matter, a phthalocyanine coloring matter, an anthraquinone coloring matter, a polymethine coloring matter, a benzene-dithiol-type ammonium compound, a thiourea derivative and a thiol metal complex.

The antiblocking agent includes inorganic particles and organic particles. The inorganic particles include an oxide, a hydroxide, a sulfide, a nitride, a halide, a carbonate, a sulfate, an acetate, a phosphate, a phosphite, an organic carboxylate, a silicate, a titanate and a borate of a IA Group, IIA Group, IVA Group, VIA Group, VIIA Group, VIIIA Group, IB Group, IIB Group, IIIB Group or IVB Group element, and hydrate compounds thereof, as well as complex compounds essentially containing them, and natural mineral particles. The organic particles include a fluorine resin, a melamine resin, a styrene-divinylbenzene copolymer, an acrylic resin silicone and crosslinked products thereof.

The pigment includes an organic pigment and an inorganic pigment. Examples of the organic pigment include an azo pigment, a quinacridone pigment, and a phthalocyanine pigment. Examples of the inorganic pigment include titanium oxide, zinc oxide, zinc sulfide, carbon black, lead pigment, cadmium pigment, cobalt pigment, iron pigment, chromium pigment, ultramarine and Prussian blue.

Examples of the dye include dyes of an azo, anthraquinone, phthalocyanine, quinacridone, perylene, dioxazine, anthraquinone, indolinone, isoindolinone, quinone-imine, triphenylmethane, thiazole, nitro or nitroso compound.

Examples of the softener include known softeners, such as a paraffinic, naphthenic or aromatic hydrocarbon oil; a vegetable oil such as peanut oil or rosin; a phosphate; a low-molecular weight polyethylene glycol; a liquid paraffin; a hydrocarbon synthetic oil such as a low-molecular weight polyethylene, an ethylene-α-olefin copolymer oligomer, a liquid polybutene, a liquid polyisoprene or a hydrogenated product thereof, a liquid polybutadiene or a hydrogenated product thereof. One alone or two or more kinds of these can be used either singly or as combined.

Examples of the crosslinking agent include a radical generator, sulfur and a sulfur compound.

Examples of the radical generator include an organic peroxide, such as a dialkyl monoperoxide such as dicumyl peroxide, di-t-butyl peroxide and t-butylcumyl peroxide; a diperoxide such as 2.5-dimethyl-2,6-di(t-butylperoxy)hexane, 2,5-dimethyl-2,5-di(t-butylperoxy)hexyne-3, bis(t-butyldioxyisoproyl)benzene, 1,1-bis(t-butylperoxy)-3,3,5-trimethylcyclohexane and n-butyl-4,4-bis(t-butylperoxy) valerate; a benzoyl group-containing peroxide such as benzoyl peroxide, p-chlorobenzoyl peroxide and 2,4-dichlorobenzoyl peroxide; a monoacylalkyl peroxide such as t-butylperoxy benzoate; a percarbonate such as t-butylperoxyisopropyl carbonate; a diacyl peroxide such as diacetyl peroxide and lauroyl peroxide. One alone or two or more kinds of these can be used either singly or as combined. Above all, 2,5-dimethyl-2,5-di(t-butylperoxy)hexane and dicumyl peroxide are preferred from the viewpoint of reactivity.

Examples of the sulfur compound include sulfur monochloride and sulfur dichloride.

In addition, as the crosslinking agent, also usable are a phenolic resin such as an alkylphenol resin and a brominated alkylphenol resin; a combination of p-quinone dioxime and lead dioxide, and a combination of p,p'-dibenzoylquinone dioxime and trilead tetroxide.

As the crosslinking aid, a known crosslinking aid can be used, and examples thereof include a polyfunctional monomer such as trimethylolpropane trimethacrylate, trimethylolpropane triacrylate, triallyl trimellitate, triallyl 1,2,4-benzenetricarboxylate, triallyl isocyanurate, 1,6-hexanediol dimethacrylate, 1,9-nonanediol dimethacrylate, 1,10-decanediol methacrylate, polyethylene glycol dimethacrylate, ethylene glycol dimethacrylate, diethylene glycol dimethacrylate, triethylene glycol dimethacrylate, divinylbenzene, glycerol dimethacrylate, and 2-hydroxy-3-acryloyloxypropyl methacrylate; and stannous chloride, ferric chloride, organic sulfonic acids, polychloroprene, and chlorosulfonated polyethylene. One kind alone or two or more kinds of crosslinking aids can be used either singly or as combined.

Examples of the crosslinking accelerator include thiazoles such as N,N-diisopropyl-2-benzothiazole-sulfenamide, 2-mercaptobenzothiazole, and 2-(4-morpholinodithio)benzothiazole; guanidines such as diphenylguanidine, and triphenylguanidine; aldehyde-amine reaction products or aldehyde-ammonia reaction products such as butylaldehyde-aniline reaction products, and hexamethylenetetramine-acetaldehyde reaction products; imidazolines such as 2-mercaptoimidazoline; thioureas such as thiocarbanilide, diethylurea, dibutylthiourea, trimethylthiourea, and diorthotolylthiourea; dibenzothiazyl disulfides; thiuram monosulfides or thiuram polysulfides such as tetramethylthiuram monosulfide, tetramethylthiuram disulfide, and pentamethylenethiuram tetrasulfide; thiocarbamates such as zinc dimethyldithiocarbamate, zinc ethylphenyldithiocarbamate, sodium dimethyldithiocarbamate, selenium dimethyldithiocarbamate, and tellurium diethyldithiocarbamate; xanthates such as zinc dibutylxanthate; and zinc oxide. One alone or two or more kinds of crosslinking accelerators can be used either singly or as combined.

Examples of the filler include an inorganic filler such as talc, clay, mica, calcium silicate, glass, glass hollow beads, glass fibers, calcium carbonate, magnesium carbonate, basic magnesium carbonate, aluminum hydroxide, magnesium hydroxide, calcium hydroxide, zinc borate, dawsonite, ammonium polyphosphate, calcium aluminate, hydrotalcite, silica, diatomaceous earth, alumina, titanium oxide, iron oxide, zinc oxide, magnesium oxide, tin oxide, antimony oxide, barium ferrite, strontium ferrite, carbon fibers, activated carbon, carbon hollow beads, calcium titanate, zinc zirconate titanate, and silicon carbide; an organic filler such as wood powder, and starch; an electroconductive filler such as carbon black, graphite, and carbon nanotubes; and a metal filler such as silver powder, copper powder, nickel powder, tin powder, copper fibers, stainless steel fibers, aluminum fibers, and iron fibers.

The content of the additive to be contained in the resin composition is not specifically limited, and can be appropriately controlled in accordance with the kind of the additive. In the case where the resin composition contains the additive, the content of the additive can be, for example, 50% by mass or less, or 45% by mass or less, or 30% by mass or less, relative to the total mass of the resin composition, and can be 0.01% by mass or more, or 0.1% by mass or more, or 1% by mass or more.

### [Production Method for Hydrogenated Block Copolymer]

The production method for the hydrogenated block copolymer of the embodiment of the present invention includes a first step of performing a polymerization reaction using at least an aromatic vinyl compound, a butadiene and the above-mentioned second conjugated diene compound as monomers to obtain a block copolymer containing a polymer block (A) that contains a structural unit derived from the aromatic vinyl compound and a polymer block (B) that contains a structural unit derived from the butadiene and a structural unit derived from the second conjugated diene compound, and a second step of hydrogenating the block copolymer.

In the first step, the block copolymer can be produced, for example, according to a solution polymerization method, an emulsion polymerization method or a solid-phase polymerization method. Above all, a solution polymerization method is preferred, and for example, employable is a known method of an ionic polymerization method of anionic polymerization or cationic polymerization, or a radical polymerization method. Above all, an anionic polymerization method is preferred. In the anionic polymerization method, at least one selected from the group consisting of an aromatic vinyl compound and a conjugated diene compound is successively added to a reactor in the presence of a solvent, an anionic polymerization initiator and optionally a Lewis base to obtain a block copolymer, and is optionally reacted with a coupling agent added thereto.

Examples of an organolithium compound which can be used as a polymerization initiator for anionic polymerization include methyllithium, ethyllithium, n-butyllithium, sec-butyllithium, tert-butyllithium, and pentyllithium. Further, examples of a dilithium compound that can be used as the polymerization initiator include naphthalene dilithium and dilithiohexylbenzene.

Examples of the coupling agent include dichloromethane, dibromomethane, dichloroethane, dibromoethane, dibromobenzene, phenyl benzoate, methyldimethoxysilane, trimethoxysilane, tetramethoxysilane, methyltrimethoxysilane, isobutyltrimethoxysilane, and Y⁻ glycidoxypropyltrimethoxysilane.

The amounts of the polymerization initiator and the coupling agent to be used are appropriately determined depending on the desired weight average molecular weight of the intended block copolymer. In general, the initiator such as an alkyllithium compound or a dilithium compound is preferably used in an amount of 0.01 to 0.2 parts by mass per 100 parts by mass of the total of the monomers such as the aromatic vinyl compound and the conjugated diene compound used for polymerization: When a coupling agent is used, it is preferably used in an amount of 0.001 to 0.8 parts by mass per 100 parts by mass of the total of the monomers.

The solvent is not particularly limited as long as it does not adversely affect the anionic polymerization reaction, and examples thereof include aliphatic hydrocarbons such as cyclohexane, methylcyclohexane, n-hexane, and n-pentane; and aromatic hydrocarbons such as benzene, toluene, and xylene. The polymerization reaction is usually carried out at a temperature of 0 to 100°C, preferably 10 to 70°C for 0.5 to 50 hours, preferably 1 to 30 hours.

In addition, by adding a Lewis base as a co-catalyst (vinylating agent) at the time of polymerization, it is possible to increase the content of the 3,4-bond and the 1,2-bond (vinyl bonding amount) in the polymer block (B).

Examples of the Lewis base include ethers such as dimethyl ether, diethyl ether, tetrahydrofuran, and 2,2-di(2-tetrahydrofuryl) propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine (TMEDA), and N-methylmorpholine; and metal salts such as sodium or potassium salts of aliphatic alcohols such as sodium t-butylate, sodium t-amylate or sodium isopentylate or sodium or potassium salts of alicyclic alcohols such as dialkylsodium cyclohexanolate, for example sodium mentholate.

Among the above-mentioned Lewis bases, preferred is use of tetrahydrofuran and DTHFP from the viewpoint of impact resistance and heat stability.

These Lewis bases may be used alone or in combination of two or more.

The amount of the Lewis base to be added is determined depending on the degree of control of the vinyl bonding amount of the butadiene unit and the second conjugated diene unit to constitute the polymer block (B). Therefore, the amount of the Lewis base to be added is not limited in a strict sense, but is preferably in the range of usually 0.1 to 1,000 mol, and preferably 1 to 100 mol per gram atom of lithium contained in the alkyllithium compound or the dilithium compound used as a polymerization initiator.

It is surely possible to carry out the above polymerization reaction without addition of a Lewis base. Especially from the viewpoint of more readily lowering the glass transition temperature of the hydrogenated block copolymer, preferably, a Lewis base is not added in the first step.

After polymerization in the first step, the polymerization reaction is stopped by adding an active hydrogen compound such as alcohols, carboxylic acids or water.

In the second step, for example, hydrogenation reaction (hydrogenation) is carried out in the presence of a hydrogenation catalyst in an inert organic solvent to obtain a hydrogenated copolymer.

The hydrogenation reaction can be carried out at a hydrogen pressure of 0.1 to 20 MPa, preferably 0.5 to 15 MPa, more preferably 0.5 to 5 MPa and at a reaction temperature of 20 to 250°C, preferably 50 to 180°C, more preferably 70 to 180°C, for a reaction time of generally 0.1 to 100 hours, preferably 1 to 50 hours.

From the viewpoint of carrying out hydrogenation reaction of the polymer block (B) while suppressing nuclear hydrogenation of the aromatic vinyl compound, examples of the hydrogenation catalyst include a Raney nickel; a Ziegler catalyst of a combination of a transition metal compound and an alkylaluminum compound or an alkyllithium compound; and a metallocene catalyst. From the same viewpoint as above, a Ziegler catalyst is preferred among the above, and a Ziegler catalyst of a combination of a transition metal compound and an alkylaluminum compound is more preferred, and a Ziegler catalyst of a combination of a nickel compound and an alkylaluminum compound (Al/Ni Ziegler catalyst) is even more preferred.

The hydrogenated copolymer thus formed can be obtained by pouring a polymerization reaction solution into methanol or the like to precipitate it, followed by filtering after stirring, or heating or drying under reduced pressure, or by pouring the polymerization reaction solution into hot water together with steam to perform so-called steam stripping for removing the solvent by azeotropic distillation, followed by heating or drying under reduced pressure.

### [Production Method for Resin Composition]

The production method for the resin composition is not specifically limited, and any known method can be employed. For example, for producing it, a hydrogenated product of the block copolymer as a component (a) and the other resin component as a component (b) are mixed using a mixing machine such as a Henschel mixer, a V blender, a ribbon blender, a tumbler blender, or a conical blender, or after mixing, the resultant mixture is melt-kneaded using a single-screw or twin-screw extruder, or a kneader.

Also, in the case where the resin composition contains the above-mentioned additive in addition to the component (a) and the component (b), the component (a), the component (b) and additionally the additive are mixed with the above-mentioned mixing machine, or after mixed, the resultant mixture is melt-kneaded with the above-mentioned apparatus to produce the resin composition.

### Examples

Hereinafter, the present invention will be described in more detail with reference to Examples, but the present invention is not whatsoever restricted by these Examples.

### [Example 1]

### <Production of Hydrogenated Product of Block Copolymer TPE-1>

50 kg of cyclohexane (solvent) dried with Molecular Sieve A4, and 0.069 kg of a cyclohexane solution of sec-butyllithium having a concentration of 10.5 % by mass as an anionic polymerization initiator (actual amount added of sec-butyllithium: 7.2 g) were charged into a nitrogen-purged dried pressure-resistant vessel.

After the temperature inside the pressure-resistant vessel was raised up to 50°C, 1.1 kg of styrene (1) was added and polymerized for 30 minutes, and then 2 kg of butadiene and 8 kg of β-farnesene were added and polymerized for 1 hour. Subsequently, 1.1 g of styrene (2) was added and polymerized for 30 minutes, and then methanol was put into the vessel to stop the reaction to obtain a reaction liquid containing a triblock copolymer of polystyrene-polybutadiene/polyfarnesene-polystyrene.

A Ziegler hydrogenation catalyst formed of nickel octylate and trimethylaluminum was added to the reaction liquid in a hydrogen atmosphere, and reacted under a hydrogen pressure of 1 MPa at 80°C for 5 hours. The reaction liquid was cooled and the pressure was released, then the catalyst was removed by washing with water, and by subsequent drying in vacuum, a hydrogenated product of a polystyrene-polybutadiene/polyfarnesene-polystyrene triblock copolymer (TPE-1) was obtained.

### [Examples 2 and 3]

### <Production of Hydrogenated Products of Block Copolymer TPE-2 and TPE-3>

According to the same process as in Example 1 except that the raw materials and the amount to be used thereof were changed as in Table 1, hydrogenated block copolymers TPE-2 and TPE-3 were produced.

### [Examples 4 to 6]

### <Production of Hydrogenated Products of Block Copolymer TPE-4 to TPE-6>

According to the same process as in Example 1 except that the raw materials and the amount to be used thereof were changed as in Table 1, hydrogenated block copolymers TPE-4, TPE5 and TPE-6 were produced.

### [Comparative Examples 1 to 3]

### <Production of Hydrogenated Products of Block Copolymer TPE-1' to TPE-3'>

According to the same process as in Example 1 except that the raw materials and the amount to be used thereof were changed as in Table 1, and that, in Comparative Example 1 and Comparative Example 3, tetrahydrofuran as a Lewis base was added at the timing of feeding the conjugated diene compound, hydrogenated block copolymers TPE-1' to TPE-3' were produced.

**Table 1**

| | | | Example | | | | | | Comparative Example | | |
|---|---|---|---|---|---|---|---|---|---|---|---|
| | | | 1 | 2 | 3 | 4 | 5 | 6 | 1 | 2 | 3 |
| Hydrogenated Product of Block Copolymer | | | TPE-1 | TPE-2 | TPE-3 | TPE-4 | TPE-5 | TPE-6 | TPE-1' | TPE-2' | TPE-3' |
| Amount Used (kg) | cyclohexane | | 50 | 50 | 50 | 50 | 50 | 50 | 50 | 50 | 50 |
| | sec-butyllithium (10.5 mass% cyclohexane solution) | | 0.069 | 0.069 | 0.069 | 0.114 | 0.069 | 0.114 | 0.134 | 0.152 | 0.076 |
| | (A) | styrene (1) | 1.1 | 1.1 | 1.1 | 1.1 | 1.1 | 1.1 | 1.9 | 1.3 | 1.9 |
| | | styrene (2) | 1.1 | 1.1 | 1.1 | 1.1 | 1.1 | 1.1 | 1.9 | 1.3 | 1.9 |
| | (B) | butadiene | 2 | 3.5 | 3.0 | 3.0 | 3.9 | 3.4 | 8.7 | 4.4 | 3.9 |
| | | β-farnesene | 8 | 6.5 | 3.7 | 3.7 | 1.5 | 2.8 | - | - | 4.8 |
| | | isoprene | - | - | 3.6 | 3.6 | 4.8 | 4.1 | - | 5.6 | - |
| | Lewis base | tetrahydrofuran | - | - | - | - | - | - | 0.12 | - | 0.11 |

### <Physical Properties of Hydrogenated Block Copolymer>

Physical properties of the hydrogenated block copolymers TPE-1 to TPE-6 and TPE-1' to TPE-3' were measured according to the following measurement methods. The results are shown in Table 2 along with the composition of each hydrogenated block copolymer.

### (Content of Polymer Block (A))

The hydrogenated block copolymer was dissolved in CDCl₃ and subjected to ¹H-NMR analysis [apparatus: "ADVANCE 400 Nano bay" (by Bruker Corporation), measurement temperature: 30°C], and the content of the polymer block (A) was calculated from the styrene-derived peak intensity.

### (Vinyl Bonding Amount in Polymer Block (B))

The block copolymer before hydrogenation was dissolved in CDCl₃ and subjected to ¹H-NMR analysis [apparatus: "ADVANCE 400 Nano bay" (by Bruker Corporation), measurement temperature: 30°C]. From the ratio of the peak area corresponding to the 3,4- bond unit and the 1,2-bond unit in the isoprene structural unit, the 3,13-bond unit and the 1,2-bond unit in β-farnesene and the 1,2-bond unit in the butadiene structural unit, relative to the entire peak area of the structural units derived from butadiene and β-farnesene (Example 1, Example 2 and Comparative Example 3), the structural units derived from butadiene, β-farnesene and isoprene (Examples 3 to 6), the structural unit derived from butadiene (Comparative Example 1) or the structural units derived from butadiene and isoprene (Comparative Example 2), the vinyl bonding amount was calculated.

### (Hydrogenation Ratio of Polymer Block (B))

The hydrogenated block copolymer was dissolved in CDCl₃ and subjected to ¹H-NMR analysis [apparatus: "ADVANCE 400 Nano bay" (by Bruker Corporation), measurement temperature: 30°C], and the hydrogenation ratio was calculated from the ratio of the peak area derived from hydrogenated butadiene, hydrogenated β-farnesene and hydrogenated isoprene, to the peak area derived from the residual olefin of butadiene, β-farnesene or isoprene.

### (Weight-Average Molecular Weight (Mw))

A polystyrene-equivalent weight-average molecular weight (Mw) of the hydrogenated block copolymer was determined by gel permeation chromatography (GPC) measurement under the following condition. In addition, Mw of the polymer block (A) alone before conjugated diene compound addition thereto was also determined according to the same process.

### «GPC Measurement Apparatus and Measurement Condition»

Apparatus: GPC apparatus "HLC-8020" (by Tosoh Corporation)
Separation column: Two columns of "TSKgel G4000HX" by Tosoh Corporation were connected in series.
Eluent: tetrahydrofuran
Eluent flow rate: 0.7 mL/min
Sample concentration: 5 mg/10 mL
Column temperature: 40°C
Detector: differential refractive index (RI) detector
Calibration curve: prepared using standard polystyrene

### (Peak top temperature and peak top intensity at tan δ, and shear storage modulus G' at -60°C of hydrogenated block copolymer)

For the following measurements, a single-layer sheet having a thickness of 1.0 mm was produced by pressurizing the hydrogenated block copolymer obtained in Examples and Comparative Examples, at a temperature of 230°C and a pressure of 10 MPa for 3 minutes. The single-layer sheet was cut into a disk shape, which was used as a test sheet.

In the measurements, in accordance with JIS K 7244-10 (2005), a strain control type dynamic viscoelastometer "ARES-G2" (by TA Instruments Japan Inc.) having a disk diameter of 8 mm was used as a parallel plate vibration rheometer.

The space between the two flat plates was completely filled with the test sheet, vibration was applied to the test sheet in a shear mode at a frequency of 1 Hz with a strain amount of 0.1%, and the temperature was increased from -80°C to 0°C at a constant rate of 3°C/min, and the maximum value of the peak intensity at tan δ (peak top intensity) and the temperature at which the maximum value was given (peak top temperature) of the hydrogenated block copolymer were determined. Further, the shear storage modulus G' at -60°C was determined.

### (Glass Transition Temperature (Tg))

For measuring Tg, the hydrogenated block copolymer was heated from - 100°C to +350°C at a rate of 10°C/min using DSC250 by TA Instruments Japan Inc. The shift position of the base line of the DSC curve (specifically, the intersection between the line at the intermediate point of the base line before and after appearance of specific heat change and the DSC curve) is referred to as Tg.

### (Crystallization Temperature and Crystallization Heat)

The crystallization temperature and the crystallization heat of the hydrogenated block copolymer were measured according to JIS K7121 (2012) and JIS K7122 (2012) using DSC250 by TA Instruments Japan Inc. Specifically, in temperature change of the following heating step 1, cooling step and heating step 2 in that order, the crystallization temperature was derived from the peak temperature of the DSC curve in the cooling step, and the crystallization heat was from the peak area thereof. For calculation of the peak area, the line running through the two points of a peak temperature + 80°C and a peak temperature +50°C on the DSC curve was taken as a base line.

Heating step 1: Heating from 40°C up to 180°C at a heating rate of 10°C/min.

Cooling step: Cooling from +180°C down to -100°C at a cooling rate of 10°C/min.

Heating step 2: Heating from -100°C up to +180°C at a heating rate of 10°C/min.

In the following Table 2, a sign "-" given to the column of "crystallization temperature" and "crystallization heat" means detection of no crystallization peak.

**Table 2**

| | Example | | | | | | Comparative Example | | |
|---|---|---|---|---|---|---|---|---|---|
| | 1 | 2 | 3 | 4 | 5 | 6 | 1 | 2 | 3 |
| Hydrogenated Product of Block Copolymer Used | TPE-1 | TPE-2 | TPE-3 | TPE-4 | TPE-5 | TPE-6 | TPE-1' | TPE-2' | TPE-3' |
| Structural Unit of Polymer Block (A) | St | St | St | St | St | St | St | St | St |
| Components Constituting Polymer Block (B) | Bd/Far | Bd/Far | Ip/Bd/Far | Ip/Bd/Far | Ip/Bd/Far | Ip/Bd/Far | Bd | Bd/Ip | Bd/Far |
| Ratio by Mass of Components Constituting Polymer Block (B) | 20/80 | 35/65 | 35/29/36 | 35/29/36 | 47/38/15 | 40/33/27 | 100 | 44156 | 45/55 |
| Ratio by Mol of Components Constituting Polymer Block (B) | 48/52 | 67/33 | 42/43/15 | 42/43/15 | 47/48/5 | 44/46/10 | 100 | 50/50 | 75/25 |
| Content of Bd-derived Structural Unit in Polymer Block (B) (mass%) | 20 | 35 | 29.1 | 29.1 | 38.2 | 33.0 | 100 | 44 | 44.8 |
| Polymer Structure | A/B/A | A/B/A | A/B/A | A/B/A | A/B/A | A/B/A | A/B/A | A/B/A | A/B/A |
| Content of Polymer Block (A) (mass%) | 18 | 18 | 18 | 18 | 18 | 18 | 30 | 20 | 30 |
| Weight-Average Molecular Weight of Polymer Block (A) | 10,000 | 10,000 | 10,000 | 6,000 | 10,000 | 6,000 | 8,500 | 5,000 | 12,000 |
| Weight-Average Molecular Weight of Hydrogenated Product of Block Copolymer | 140,000 | 155,000 | 170,000 | 100,000 | 225,000 | 100,000 | 85,000 | 80,000 | 120,000 |
| Hydrogenation Ratio in Polymer Block (B) (mol%) | 98 | 98 | 98 | 98 | 99 | 99 | 99 | 99 | 99 |
| Vinyl Bonding Amount in Polymer Block (B) (mol%) | 10 | 8 | 7 | 7 | 7 | 7 | 40 | 7 | 7 |
| Glass Transition Temperature (°C) | -64 | -63 | -63 | -64 | -60 | -62 | -54 | -56 | -56 |
| Crystallization Temperature (°C) | - | -21 | -51 | -54 | -20 | -36 | 3 | -7 | 10 |
| Crystallization Heat (J/g) | - | 9.7 | 2.7 | 2.3 | 12.6 | 7.1 | 18.5 | 20.3 | 18.1 |
| Peak Top Temperature (°C) at tanS | -54 | -52 | -55 | -56 | -53 | -54 | -47 | -48 | -49 |
| Peak Top Intensity at tanδ | 2.0 | 1.3 | 1.6 | 1.7 | 0.9 | 1.3 | 0.3 | 0.6 | 0.6 |
| G' (MPa) at -60°C and 1 Hz | 72 | 107 | 45 | 42 | 130 | 120 | 230 | 210 | 200 |

As obvious from Table 2, in the hydrogenated block copolymers of Example 1 and Example 2, the polymer block (B) contains a structural unit derived from butadiene and a structural unit derived from β-farnesene, and Tg of the copolymers is -64°C and -63°C, respectively. In other words, the hydrogenated block copolymers of Examples 1 and 2 satisfy the above-mentioned requirement (1) and requirement (2). In addition, of the hydrogenated block copolymers of Example 1 and Example 2, the peak top temperature at tanδ is -54°C and -52°C, respectively, and the peak top intensity at tanδ is 2.0 and 1.3, respectively. From these, it is known that the copolymers can exhibit high flexibility in a low temperature range. Further, the hydrogenated block copolymers of Example 1 and Example 2 have a low shear storage modulus G' at -60°C and 1 Hz, and are known to exhibit excellent rubber elasticity and flexibility in a low temperature range of -60°C.

In the hydrogenated block copolymers of Examples 3 and 4, the polymer block (B) contains a structural unit derived from butadiene, a structural unit derived from β-farnesene and a structural unit derived from isoprene, and Tg of the copolymers is -63°C and -64°C, respectively. In other words, the hydrogenated block copolymers of Examples 3 and 4 satisfy the above-mentioned requirement (1) and requirement (2). In addition, of the hydrogenated block copolymers of Examples 3 and 4, the peak top temperature at tanδ is -55°C and -56°C, respectively, and the peak top intensity at tanδ is 1.6 and 1.7, respectively. It is known that the copolymers can exhibit high flexibility in a low temperature range. Further, the hydrogenated block copolymers of Examples 3 and 4 have a low shear storage modulus G' at -60°C and 1 Hz, and are known to exhibit excellent rubber elasticity and flexibility in a low temperature range of -60°C.

Also, in the hydrogenated block copolymers of Examples 5 and 6, the polymer block (B) contains a structural unit derived from butadiene, a structural unit derived from β-farnesene and a structural unit derived from isoprene, and Tg of the copolymers is -60°C and -62°C, respectively. Thus, the copolymers satisfy the above-mentioned requirement (1) and requirement (2). The hydrogenated block copolymers of Examples 5 and 6 have a crystallization temperature of -20°C and -36°C, respectively, and have good flexibility and rubber elasticity. However, as compared with the hydrogenated block copolymers of Examples 3 and 4, these are known to have a property of being slightly easy to solidify at a low temperature.

On the other hand, the hydrogenated block copolymer of Comparative Example 1, in which the polymer block (B) is formed of a structural unit alone derived from butadiene, has Tg of -54°C, and does not satisfy the requirement (2), and as compared with that of the hydrogenated block copolymer of Example 1, the peak top temperature at tanδ thereof is high and the peak top intensity at tanδ thereof is small, from which it is known that the hydrogenated block copolymer of Comparative Example 1 is inferior in flexibility in a low temperature range. In addition, of the hydrogenated block copolymer of Comparative Example 1, the shear storage modulus G' at -60°C and 1 Hz is larger than that of Example 1, and the copolymer of Comparative Example 1 is known to be inferior to that of Example 1 in rubber elasticity and flexibility in a low temperature range.

In hydrogenated block copolymers of Comparative Example 2 and Comparative Example 3, the polymer block (B) contains a structural unit derived from butadiene and a structural unit derived from a conjugated diene compound except butadiene, and these copolymers satisfy the requirement (1). However, both the two have Tg of -56°C, and do not satisfy the requirement (2). As compared with the hydrogenated block copolymer of Example 1, these comparative copolymers have a higher peak top temperature at tanδ and a smaller peak top intensity at tanδ, and are known to be inferior in flexibility in a low temperature range. In addition, the hydrogenated block copolymers of Comparative Example 2 and Comparative Example 3 have a larger vale of shear storage modulus G' at - 60°C and 1 Hz than the copolymer of Example 1 and are known to be inferior to the copolymer of Example 1 in rubber elasticity and flexibility in a low temperature range.

### [Examples 7 to 12, Comparative Examples 4 to 10]

Using a twin-screw extruder ("ZSK26Mc" by Coperion Corporation) under the condition of a cylinder temperature 200°C, and a screw revolution number 300 rpm, the hydrogenated product of block copolymers obtained in Examples and Comparative Examples (TPE-1, TPE-4, TPE-6 and TPE-1') and the following resins were fed according to the formulation shown in Table 3, and melt-kneaded to obtain resin compositions.
PP-1: homopolypropylene "Prime Polypro J106G (MI = 15%)" (by Prime Polymer Co., Ltd.)
POE-1: ethylene-propylene terpolymer "EPT 3092PM" (by Mitsui Chemical Co., Ltd.)
POE-2: α-olefin copolimer "TAFMER DF605" (by Mitsui Chemicals, Inc.)

The resin compositions of Examples 7 to 12 and Comparative Examples 4 to 10 were measured according to the following processes. The results are shown in Table 3 along with the resin formulations.

### (Bending Strength and Bending Elastic Modulus)

Each resin composition was injection-molded using an injection-molding machine ("EC75SX" by Shibaura Machine Co., Ltd.) to produce JIS multipurpose test pieces A1. Using a universal tester (by Instron Corporation, Model 5566) based on JIS K 7171 (ISO 178), each piece (length 80 mm × width 10 mm × thickness 4 mm) was tested at the central part thereof in a bending strength test to measure the bending strength [MPa] and the bending elastic modulus [GPa].

### (Charpy Impact Strength)

Using an injection-molding machine ("EC75SX" by Shibaura Machine Co., Ltd.), each resin composition was injection-molded in a size of length 10 mm × width 80 mm × thickness 4 mm, and notch-wise cut based on JIS K 7111 to give test pieces. The test pieces were stored at 23°C for 16 hours, and the Charpy impact strength thereof (23°C) was measured using an impact strength tester. Similarly, the test pieces were stored at -20°C for 16 hours, and the Charpy impact strength thereof (-20°C) was measured using an impact strength tester.

**Table 3**

| | | Example 7 | Example 8 | Example 9 | Example 10 | Example 11 | Example 12 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|
| Resin Composition [part by mass] | PP-1 | 90 | 90 | 80 | 90 | 80 | 80 | 100 | 90 | 80 | 80 | 80 | 80 | 80 |
| | TPE-1 | 10 | - | - | - | | - | | - | - | - | - | - | - |
| | TPE-4 | - | 10 | 10 | - | - | - | | - | - | - | - | - | - |
| | TPE-6 | - | - | - | 10 | 20 | 10 | - | - | - | - | - | | - |
| | TPE-1' | - | - | - | - | - | - | - | 10 | 20 | 10 | - | 10 | - |
| | POE-1 | - | - | 10 | - | - | - | - | - | - | 10 | 20 | - | - |
| | POE-2 | | - | - | - | - | 10 | | - | - | - | - | 10 | 20 |
| Bending Strength [MPa] | | 40 | 40 | 30 | 38 | 32 | 34 | 45 | 40 | 32 | 32 | 31 | 32 | 34 |
| Bending Elastic Modulus [GPa] | | 1.3 | 1.3 | 1.1 | 1.4 | 1.2 | 1.2 | 1.5 | 1.3 | 1.2 | 1.1 | 1.1 | 1.2 | 1.2 |
| Charpy Impact Strength (23°C) [kJ/m²] | | 3.7 | 4.2 | 15.2 | 8.2 | 15.5 | 10.9 | 1.9 | 2.7 | 6.3 | 8.9 | 8.5 | 7.9 | 7.7 |
| Charpy Impact Strength (-20°C) [kJ/m²] | | 3.1 | 3.1 | 8.5 | 3.8 | 7.6 | 4.7 | 1.1 | 1.4 | 1.8 | 5.3 | 4.8 | 3.5 | 2.1 |

Comparative Example 4 using PP-1 alone was excellent in bending strength and bending elastic modulus, but the impact resistance thereof at a low temperature was extremely low.

On the other hand, it is known that, as compared with the resin composition of Comparative Example 5 using TPE-1' not satisfying the requirements in the present invention, the resin compositions of Examples 7 and 8 has improved impact strength at 23°C and impact strength at -20°C while securing values of bending strength and bending elastic modulus equivalent as those of the comparative resin composition. In addition, it is known that, as compared with the resin composition of Comparative Example 5, the resin composition of Example 10 also has a sufficiently practicable value of bending strength though it is slightly lower than that of the comparative resin composition but is almost equivalent to the latter, and has remarkably improved impact strength at 23°C and impact strength at -20°C.

It is known that, as compared with the resin composition of Comparative Example 8 using POE-1 alone except PP-1, the resin composition of Example 9 has a sufficiently practicable value of bending strength though it is slightly lower than that of the comparative resin composition but is almost equivalent to the latter, and has remarkably improved impact strength at 23°C and impact strength at - 20°C.

It is known that, as compared with the resin composition of Comparative Example 6 using TPE-1 not satisfying the requirements in the present invention, the resin composition of Comparative Example 7 using both TPE-1' and POE-1 and the resin composition of Comparative Example 9 using both TPE-1' and POE-2, the resin composition of Example 11 has remarkably improved impact strength at 23°C and impact strength at -20°C, while having bending strength and bending elastic modulus on the same level as that of the comparative resin compositions.

Further, it is known that the resin composition of Example 12 has bending strength and bending elastic modulus on the same level as that of the resin composition of Comparative Example 10 using POE-2 alone except PP-1, but has remarkably improved impact strength at 23°C and impact strength at -20°C, and that, as compared with the resin composition of Comparative Example 9 using both TPE-1' and POE-2 not satisfying the requirements in the present invention, the resin composition of Example 12 has improved impact strength at 23°C and impact strength at -20°C and additionally the bending strength thereof has improved slightly.

### Industrial Applicability

The hydrogenated product of a block copolymer and the resin composition of the present invention can be used for housings for automobiles, for various parts to be mounted on automobiles and housings thereof and the like. In addition, in the field of home electrical appliances, the hydrogenated product of a block copolymer and the resin composition of the present invention can be used for various electrical appliances such as televisions, various recorders such as Blu-ray recorders and HDD recorders, projectors, game machines, digital cameras, home videos, antennas, speakers, electronic dictionaries, IC recorders, FAXes, copiers, telephones, doorphones, rice cookers, microwave ovens, oven ranges, refrigerators, dishwashers, dish dryers, IH cooking heaters, hotplates, cleaners, washing machines, chargers, sewing machines, clothes irons, dryers, electric bicycles, air cleaners, water purifiers, electric toothbrushes, luminaires, air conditioners, outdoor units of air conditioners, dehumidifiers, and humidifiers.

## Claims

1. A hydrogenated product of a block copolymer comprising a polymer block (A) that comprises a structural unit derived from an aromatic vinyl compound and a polymer block (B) that comprises a structural unit derived from a conjugated diene compound, which satisfies the following requirements:
(1) The structural unit derived from a conjugated diene compound of the polymer block (B) has a structural unit derived from butadiene and a structural unit derived from a second conjugated diene compound which is a conjugated diene compound except butadiene.
(2) The glass transition temperature is -57°C or lower.

2. The hydrogenated product of a block copolymer according to claim 1, wherein the content of the polymer block (A) in the hydrogenated product of a block copolymer is 25% by mass or less.

3. The hydrogenated product of a block copolymer according to claim 1 or 2, wherein the weight-average molecular weight of the polymer block (A) is 5,000 to 20,000.

4. The hydrogenated product of a block copolymer according to any one of claim 1 to 3, wherein the hydrogenation ratio of the polymer block (B) is 85 mol% or more.

5. The hydrogenated product of a block copolymer according to any one of claims 1 to 4, wherein the weight-average molecular weight of the hydrogenated product of a block copolymer is 30,000 to 450,000.

6. The hydrogenated product of a block copolymer according to any one of claims 1 to 5, wherein the content of the structural unit derived from butadiene in the polymer block (B) is 10 to 90% by mass.

7. The hydrogenated product of a block copolymer according to claim 6, wherein the content of the structural unit derived from butadiene in the polymer block (B) is 10 to 40% by mass.

8. The hydrogenated product of a block copolymer according to any one of claims 1 to 7, wherein the second conjugated diene compound contains a β-farnesene.

9. The hydrogenated product of a block copolymer according to claim 8, wherein the total content of the structural unit derived from butadiene and the structural unit derived from β-farnesene in the polymer block (B) is 60% by mass or more.

10. The hydrogenated product of a block copolymer according to any one of claims 1 to 9, having a shear storage modulus G' of 180 MPa or less, as measured at -60°C in a complex shear viscosity test under the condition of a frequency 1 Hz according to JIS K7244-10(2005).

11. The hydrogenated product of a block copolymer according to any one of claims 1 to 10, having a peak top temperature at a loss tangent tanδ of -50°C or lower, as measured under the condition of a strain 1%, a frequency 1 Hz, a measurement temperature -80 to 0°C, a heating rate 3°C/min and a shear mode, according to JIS K7244-10(2005).

12. The hydrogenated product of a block copolymer according to any one of claims 1 to 11, having a glass transition temperature of -60°C or lower.

13. The hydrogenated product of a block copolymer according to any one of claims 1 to 12, wherein the vinyl bonding amount in the polymer block (B) is 3 to 15 mol%.

14. A resin composition comprising:
the hydrogenated product of a block copolymer of any one of claims 1 to 13, as a component (a), and
one or more selected from the group consisting of a polyolefin, a styrenic resin, a polyphenylene ether, a polyester resin, a polycarbonate, a polyacetal, a polyamide, a polyarylene sulfide, a polyarylate, a polyimide, a polyether ether ketone, and a liquid-crystal polyester, as a component (b), wherein:
the content ratio of the component (a) to the component (b), (a)/(b) is 1/99 to 99/1 by mass.

15. A method for producing the hydrogenated product of a block copolymer of any one of claims 1 to 13, comprising:
a first step of performing a polymerization reaction using at least an aromatic vinyl compound, a butadiene and the second conjugated diene compound as monomers to obtain a block copolymer comprising a polymer block (A) that comprises a structural unit derived from the aromatic vinyl compound and a polymer block (B) that comprises a structural unit derived from the butadiene and a structural unit derived from the second conjugated diene compound, and
a second step of hydrogenating the block copolymer.
